# EUROPEAN PATENT SPECIFICATION

(11) **EP 3 014 350 B1**
(45) Date of publication and mention of the grant of the patent: **07.06.2023**
(21) Application number: 14753319.4
(22) Date of filing: 25.06.2014
(51) Int. Cl.: G02F 1/167

(54) **ELECTRONIC DISPLAY FOR A STORE**
ELEKTRONISCHE ANZEIGE FÜR EIN GESCHÄFT
AFFICHAGE ÉLECTRONIQUE POUR MAGASIN

(30) Priority: 25.06.2013 NL 2011035
(43) Date of publication of application: 04.05.2016
(73) Proprietor: eLstar Dynamics Patents B.V., 3235 CD Rockanje (NL)
(72) Inventor: AMESZ, Henricus Johannes, NL-1399 GR Muiderberg (NL)
(74) Representative: DeltaPatents B.V.
(86) International application number: PCT/NL2014/050420
(87) International publication number: WO 2014/209119

(56) References cited:
- WO-A1-2011/012499
- WO-A1-2011/131689
- JP-A- 2001 356 374
- JP-A- 2003 005 229
- US-A1- 2002 167 500

## Description

### FIELD OF THE INVENTION

The present invention is in the field of an electronic display device for use in a store. The invention further relates to a use of a display device for providing a long term stable image, and for regular updating information, a method of changing information on a display device, an information system comprising a display device, and a store information system.

### BACKGROUND OF THE INVENTION

Electronic display devices and especially electrophoretic display devices are a relatively new technique of pixilated display devices in which charged pigment particles are moved to generate a required pigmentation of a pixel.

For further details of present developments in this field as well as for drawbacks of the present technology reference is made to recently filed NL2010936, which reference is incorporated herein by explicit reference. Some details are provided below.

A benefit of the in-plane switching of charged particles is that the electrophoretic display device may comprise a transparent state, allowing a choice of reflector or possibly backlight.

However, in an electrophoretic display it is relatively difficult to control the electrical field and particle motion distribution accurately enough to provide a homogenous pixel absorbance in the "dark" state.

Also switching from a first state to a second state in the above display is relatively slow; typically too slow for many applications, even with recently improved devices. It is noted that typically prior art particles move at a speed of less than about 1 mm per second, which is at least ten times too slow.

It is noted that some major companies developing displays have stopped to develop electrophoretic displays, being discouraged by negative results, complexity of the technology, and lack of prospect. For similar reason providers of pigmented particles had stopped further development as well.

Use and practical applications of the above electronic displays are so far limited, typically to relatively expensive devices.

A problem with present stores, such as supermarkets, do it yourself shops, tool shops, electronic shops, multipurpose shops, general stores, especially stores with a relative large number of articles, is that on a daily basis prices of articles may change and adaptation of prices is then required. As an estimate a moderate sized supermarket changes prices from 1200-6000 articles per day. Clearly such is a complex operation with a relatively high risk of making mistakes.

The operation of changing prices also involves a large effort, e.g. in terms of labor. Changing pricing information typically also involves changing prices tags, typically attached to a shelf on which articles are available to a customer. So it is a costly operation.

In various countries supermarkets are obligated by law to provide correct price information. Penalties for not providing correct information are high, such as many thousands of euros per incident. In other words, stores can not afford to risk such high penalties.

US 2002/167500 A1 recites smart and dumb implementations of a standalone, remotely updateable, remotely alterable, flexible electronic label. The electronic label provides for displaying information, such as prices, bar codes, advertising messages and restocking information, in connection with a mammal, non-mammal, an item or location. The flexibility and form factor of the electronic label allow the label to fit into and conform to the shape of the molding used in retail store shelving to display merchandize and warehouse shelving. The label can be of various sizes, shapes and lengths to allow for multiple applications. To the knowledge of present inventors these labels have not found their way into stores yet, most likely because the labels are not stable enough, are prone to electrical failure, and need regular refreshing.

It is an objective of the present invention to overcome disadvantages of the prior art electronic display device and information updating without jeopardizing functionality and advantages.

### SUMMARY OF THE INVENTION

The present invention is defined in the claims.

In view of the present electrophoretic display device it is noted that a pixel thereof comprises an enclosed space, having a liquid and pigment particles. The pigment particles are allowed to move freely throughout the space, typically in a horizontal direction. The space (or pixel) typically is in the order of 50-500 µm. Upon applying an electro-magnetic field the pigment particles move through the liquid, from a storage area to an aperture area, and vice versa. In the storage area the particles are hidden from a viewer. E-ink technology, such as of US2002/167500 Al, is a different technology. Pigment particles can not freely move, as they are enclosed in microcapsules. Also pigment particles are relatively large, typically larger than 500 nm (0.5 pm), and on average 1 µm or larger. Upon applying an electric field negatively charged black particles may move from a light state to a dark state, that is from a bottom to a top of the microcapsule, i.e. in a vertical direction. In the light state the black particles are not visible because white particles are in their view path, whereas in the dark state the black particles are in the view path of the black particles. The microcapsules are relatively small (50 µm or less). It is noted that despite claims colored particles are simply not available for the E-ink technology. Only by applying a color filter a color may be provided. At best such relates to a very limited number of colors, and certainly not to full color displays. E-ink, is however at present much more "bi-stable" (blackwhite) than the present electrophoretic displays (visible versus hidden); it is also is capable of much faster switching between the bi-stable states. E-ink has as (further) disadvantage that is relatively difficult to produce, production is expensive, and production yield is too low (too much fracture, too much waste).

The present invention relies partly on earlier research and development by IRX Technologies B.V. For that reason and for better understanding of the underlying technology reference is made to recently filed (June 7, 2013) Dutch Patent application NL2010936; said application refers back to amongst others WO 2011/012499 A1 and WO2011/131689 A1. These documents are incorporated by reference. It is noted that the technology disclosed in the above international patent applications has not been put into practice yet. Various obstacles have been encountered that still had to be solved. For instance bi-stability and switching times were not according to standards. Various other aspects, examples, advantages and so forth are in principle one to one applicable to the present invention. The teachings and examples of the above document are incorporated by reference herein. The present invention provides amongst others an improved layout in view of the prior art.

An important advantage of the present pixel and device is that they can be read in full sunlight.

Even further the present pixel and device are fully adaptable, e.g. to changing light conditions. As a result a large number of novel applications and uses come into sight.

The present invention provides a device having information displayed therein, which information can be changed instantly. When referring to dimensions of the present device a width relates to a largest dimension thereof. In typical supermarket or store applications in an example the present device has a width of smaller than 20 cm, such as from 5-15 cm, a height of 2-8 cm, such as 3-5 cm, and a thickness of 0.0005 cm-0.5 cm, such as 0.01-0.3 cm. In principle the present display may be provided as a flexible display.

It has recently been found that charged particles do not remain in the storage area for a sufficiently long time. For prior art devices particles remain in a storage area during less than a few seconds, during which the aperture area is almost fully covered with particles, therewith deleting any image. In view thereof a restrictor is provided. As a result both the switching time and bi-stable time are acceptable. The switching time is below 1 second, typically below 500 mseconds, such as below 350 mseconds, whereas the bi-stable time is above 10 seconds, typically above 120 seconds. The present restrictor also overcomes a prior art need to totally refresh an image; such an image would disappear for about 0.5 seconds; with the present restrictor only fading needs to be compensated for. The present restrictor is preferably a switchable restrictor, i.e. it may be in an active state or in a passive state. The restrictor especially improves the bi-stable time by at least a factor, such by at least two times, and typically by at least ten times. Thereby the restrictor makes it possible to use the present pixels in many envisaged applications, whereas without the restrictor effectively the pixels can not be put into practical use, albeit at the expense of some power consumption.

In an example of the present pixel the restrictor is a temperature sensitive gel. An optional further restrictor is a magnetic changer of the pigment particles.

In an example of the present pixel an unclaimed restrictor that may be combined with a claimed embodiment is one or more of an electro-magnetic field of opposite character of the pigment particle charge provided in the storage area, an electro-magnetic field of same character of the pigment particle charge provided in the aperture area, a chemical changer of the pigment particles. The electromagnetic field may be provided at regular intervals, such as once every second during a few milliseconds, preferably at a limited rate , such as once every 10 seconds, or once every minute. The electro-magnetic field may be a direct field or an alternating field. In view of particles an alternating field may be preferred. Such depends a bit on a type of pigments used, the fluid used, etc. An advantage is that an image remains, to the human eye, relatively stable, especially as no need for a complete refresh of an image is reguired. The field may be an electrical field, such as a field of 0.25-48 V, preferably 0.3-24 V. Likewise a magnetic field can be applied. The restrictor may also relate to a chemical change of particles and/or fluid. Such a change can be established by e.g. an acid-base reaction, a temperature change, and a change in electro-magnetic field, thereby changing a charge of the pigment. As such the pigment particle may be coated with a compound, the compound being capable of the mentioned acid-base reaction. As an example of a temperature sensitive gel polyi socyanopeptides, grafted with oligo(ethylene glycol) side chains are mentioned. These gels are found to increase the viscosity with increasing temperature in a drastic fashion. Such a gel is especially advantageous when using the present pixels at an elevated temperature, such as a window blind. Also a change in magnetic properties may be used, such as caused by hysteresis, wherein the hysteresis is preferably (semi- )symmetrical with respect to a field applied.

The present display device in an example comprises information relating to a product (or article) available on a shelf to which the present device is attached or adhered. The information may provide further details on the product, such as contents thereof, volume thereof, manufacturer, origin, price per unit weight, etc. In an example the display device may further comprise a logo of the store, brand info, special offers, colored info, and highlighting. In an example also a barcode or a data matrix code is provided. A Data Matrix code typically is a two-dimensional matrix barcode consisting of black and white "cells" or modules arranged in either a square or rectangular pattern. The information to be encoded can be text or raw data. Usual data size is from a few bytes up to 2 kilobytes. The length of the encoded data depends on the symbol dimension used. Error correction codes are added to increase symbol strength: even if they are partially damaged, they can still be read. A Data Matrix symbol can store up to 2,335 alphanumeric characters. Data Matrix symbols are typically rectangular in shape and usually square, they are made of cells: little elements that represent bits. Depending on the situation a "light" module is a 0 and a "dark" module is a 1, or vice versa. Every Data Matrix is composed of two solid adjacent borders in an "L" shape (called the "finder pattern") and two other borders consisting of alternating dark and light "cells" or modules (called the "timing pattern"). Within these borders are rows and columns of cells encoding information. The finder pattern is used to locate and orient the symbol while the timing pattern provides a count of the number of rows and columns in the symbol. As more data is encoded in the symbol, the number of cells (rows and columns) increases. Symbol sizes vary from 8×8 to 144×144.

The most popular application for Data Matrix is marking small items, due to the code's ability to encode fifty characters in a symbol that is readable at 2 or 3 mm² and the fact that the code can be read with only a 20% contrast ratio. The Data Matrix is scalable, with commercial applications as small as 300 micrometers (laser etched on a 600 micrometer silicon device) and as large as a 1 meter (3 ft.) square (painted on the roof of a boxcar). Fidelity of the marking and reading systems are the only limitation. It is noted that for such barcodes or data matrix codes resolution of a display needs to be sufficient. The present electrophoretic display is regarded sufficient for such intended use. It is noted that an optical resolution of a data matrix and of an optical camera, is typically much better than optical resolution of a display device. In view thereof it is also preferred to have a display with a relative high optical resolution, such as the present device.

The present device comprises a driver circuit for changing appearance of pixels by applying an electro-magnetic field.

The present device further comprises a means for receiving data, such as product data, price data, barcode, matrix code, etc. It is preferred to provide data in a wireless mode; however data may also be provided by connecting a cable or the like, such as be providing a USB-port or the like. For the wireless mode preferably an RFID per display is provided.

The present device may comprise a unique code for identification, wherein each unique code or likewise the device may be coupled to an individual product (lying on the shelf).

Thereby the present invention provides a solution to one or more of the above mentioned problems.

Advantages of the present description are detailed throughout the description.

### DETAILED DESCRIPTION OF THE INVENTION

The present invention relates in a first aspect to display device according to claim 1.

In an example the present device comprises one or more of a means for storing data, such as a memory, such as RAM, a ROM, a flash memory, etc. The device may further comprise a means for processing data, such as a CPU, for making received data visible, for addressing individual pixels, for refreshing a display, etc. The device may further comprise a means for near field communication, such as a receiver and a transmitter. As such a display device may directly be addressed using a suitable signal, the signal providing updated information. Typically such communication also involves handshaking protocols, such as identifying an ID of a device and e.g. a computer or the like providing further information.

It is noted that by providing (wireless) signals throughout a store or the like all display devices may be updated within a small time frame. Such can be repeated e.g. every hour, or every minute. In fact continuous communication between device and information providing means, such as a computer, may be continuous.

As the present device and in particular an electrophoretic display device consumes a minute amount of energy a small means of providing power, such as a battery, a capacitor, a coil, etc. may be provided. It is noted that power consumption of the present device is so low that the display needs to be refreshed at the most only every two hours.

The present device may in an example comprise a controller, such as a chip, a CPU. The controller, driver, power supply, means for transmitting and receiving may be integrated.

In an example the present device is attached to a shelf or the like. Thereto a means for attaching is provided, such as an adhesive, a clamp, a permanent magnet, etc.

In an example the present device is a combination of an electrophoretic display, and one or more of an LCD, and a LED-display. In view of e.g. energy consumption, resolution, and visibility, an electrophoretic display is preferred.

In an example the present electrophoretic display device comprises sophisticated pixels, the pixels comprising at least one aperture area being visible. The present pixel can be switched relatively quick, in the order of (a few) milliseconds, which is considered fast enough for most applications. The present pixel comprises an aperture, for allowing passage of light, in principle into and out of the pixel. It is noted that a pixel is confined by e.g. an upper transparent glass plate, protecting the pixel from the environment. The upper part is visible to a user. Part of the upper part relates to an aperture area. The aperture area may comprise further optical elements, such as a lens, e.g. a Fresnel lens, a prism, etc. Another part comprises further functional elements of the pixel, typically (intentionally) not transparent to light.

The pixel comprises a fluid (or liquid). The fluid may be any suitable fluid and a combination of suitable fluids. It is preferred to use a relatively low viscosity fluid, such as having a dynamic viscosity of 1 mPa.s or less. The fluid comprises at least one type of pigment particles having a diameter smaller than 500 nm. It has been found that these particles provide a good distribution of particles over the present (field) electrode. In view of an electro-magnetic field to be applied the present particles are being chargeable or charged. Likewise magnetic particles may be used. A small charge per particle is found to be sufficient, such as from 0.1e to 10e per particle. A concentration of particles is in the order of 1-100 g/l. A size of an electric potential is in the order of 0.5-50 V, preferably from 1-20 V, such as 5-15 V. For the present pixel a relatively large potential is preferred, e.g. 15-10 V. It has been found that fluid behaviour is better at a higher voltage, e.g. in terms of flow, and switching time. It is preferred to have particles charge stabilized. As such a better performance e.g. in view of distribution over the field electrode, and faster and better controllable switching times are achieved.

The pixel further comprises at least two electrodes spaced apart for providing an electric-magnetic field, of which at least one electrode is an accumulation electrode and at least one electrode is a field electrode. The accumulation electrode accumulates particles when these are intended not to be visible, whereas the field electrode attracts particles when these are intended to be visible. As a consequence the at least one field electrode occupies a field electrode area, the field electrode area and aperture area largely coinciding. One electrode may relate to an electrically neutral (or ground) electrode. It is noted that the terms "accumulation" and "field" relate to a function intended by the respective electrodes.

In an example a thin-film transistor is applied to drive a pixel, optionally in combination with other drivers.

Further the pixel comprises at least one storage area for storing the at least one type of pigment particles out of sight. As a consequence the at least one storage area is adjacent to the at least one aperture area.

For improved performance, e.g. in terms of switching time, distribution of particles, durability, etc. it is preferred to have at least two accumulation electrodes and at least two field electrodes, more preferably at least one of each electrode located at a side of the pixel.

As mentioned above the present pixel is relatively small, having a length of the pixel being smaller than 250 um, preferably smaller than 150 µm, more preferably smaller than 100 µm, such as smaller than 90 µm. Present designs relate to a length of 150 um, of 85 µm, of 75 µm, and of 50 um. A smallest size considered at this point in time is about 25 µm. Also combinations of sizes are envisaged; such could imply a standardized unit length of e.g. 75 µm is used, and multiplicities thereof. Typically a width of the pixel has a similar or the same dimension. Switching from a first state to a second state is found to be relatively slow; typically too slow for many applications, even with recently improved devices. It is noted that typically prior art particles move at a speed of less than about 1 mm per second, which is at least ten times too slow. The requirements of relative fast switching (time) and bi-stable character of an electrophoretic pixel are conflicting, and have not been adequately resolved yet. Even further, some of the proposed solutions introduce further problems, such as a remaining haze, instable storage of the pigments, electric breakdown of a charged pixel, etc. So despite recent developments, no final solutions relating to working devices have been provided.

It has been found that in view of switching times a size of the pixel needed to be much smaller than was available by prior art techniques (some 300 µm). Unexpectedly the switching time decreased dramatically (non-linear).

The present pixel now provides an optical resolution that is more than sufficient for any application considered at this point in time. In an example maps may be provided on a smartphone, having sufficient optical detail to find ones way. Further a reader can continue reading for a long period of time, without getting tired. It is noted that in this respect LCD-displays provide too much light.

In an example of the present pixel the fluid carries a charge. Such has been found to be particularly advantageous, in similar terms as mentioned above.

It has been found that a disadvantage of the present pixels, and especially of smaller pixels, is that an electrical breakdown may occur. In order to prevent such a breakdown further measures may be incorporated. In an example the fluid has a reduced permittivity εᵣ of less than 10, preferably of less than 5. However, such change in permittivity typically involves further compounds, such as oils, which are not (fully) compatible with other constituents. Thereto further compounds/components may be added, such as a surfactant, an emulsifier, a polar compound, and a compound capable of forming a hydrogen bond. In view of relatively quick switching times it has been found that the viscosity of the fluid is preferably less than 0.1 Pa*s, such as by using a mixture comprising ethylene glycol.

In an example the present pixel has a rectangular shape, such as a square shape, or a hexagonal shape. In view of switching times these layouts have been found to perform optimally. The hexagonal shape has a further advantage in that each side of the hexagon may be used for accumulating pigment particles. By varying charges or otherwise a first side can be used for red particles, a second side for green particles, and a third side for blue particles, and so further. Such could also be achieved by sub-dividing at least one side of a square pixel.

In an example of the present pixel the at least one type of pigment particles comprise one or more of white particles, red particles, green particles, blue particles, black particles. As such a combination of visible pigment particles may be provided, thereby obtaining any intended colour, in any intended brightness. In principle the same effect could be obtained by using one or more pigment particles that absorb (a specific wavelength (region) of) light. Likewise also reflective pigments may be used. The present small pixel size makes it possible to make e.g. in a matrix format a red pixel, adjacent to a blue pixel, adjacent to a green pixel, etc. As such a mixture of colours may be provided by activating an intended pixel, in an intended intensity, etc.

In an example of the present pixel each type of pigment particle carries a significantly different charge, such as one being charged positively, another negatively, a third with a small charge, and a fourth with a large charge, etc. In an example the charge is from 5*10⁻⁷-0.1 C/m², such as from 1*10⁻⁵-0.01 C/m². In an example the present pigment may change colour or appearance upon applying an electro-magnetic field, or likewise upon removing such a field.

In an example of the present pixel the pigment particles are smaller than 400 nm, preferably smaller than 100 nm, typically larger than 10 nm. In view of performance, switching times, distribution, etc. the above sizes are found to be optimal. It is preferred to provide a stable dispersion; as such the above sizes are preferred. The particle size is considered to be a measure of an averaged diameter thereof.

In an example the present fluid is provided in an amount of 1-100 gr/m², preferably 2-75 gr/m², more preferably 20-50 gr/m², such as 30-40 gr/m², and the present pigments are provided in an amount of 0.02-30 gr/m², preferably 0.05-10 gr/m², more preferably 0.5-5 gr/m², such as 1-3 gr/m².

In an example the present pixel further comprises a UV-filter. Such is not considered yet, however, inventors have identified that some of the elements inside a pixel and possibly a transparent layer are preferably protected from environmental effects, such as UV-light. In an example especially an electrode needs to be protected from UV-light.

In an example of the present pixel the aperture area is more than 90% transparent, preferably more than 95%. The aperture area may be made of glass and a suitable polymer, such as poly carbonate (Perspex). The material for the aperture, e.g. glass, may have a thickness of 0.2 µm - 2 mm. If a flexible pixel and/or display are required it is preferred to use a thin material. If some strength is required, a thicker material is preferred. It has been found that with such transparency energy consumption can even be further reduced. In this respect it is noted that the present pixel uses about 0.1% of prior art pixels, such as LCD-pixels. Such provides huge advantages, e.g. in terms of usage, reduced need for loading devices, smaller charge storing devices, etc. Especially when a power grid is not available such will be appreciated. It is noted that power consumption of e.g. smartphones is significant. Any reduction in power consumption will be beneficial to the earth.

In an example of the present pixel the at least one field electrode is at least partly transparent to visible light, preferably more than 95% transparent. In an example an upper electrode, e.g. in a stack of pixels, is preferably as transparent as possible. In a further example the at least one field electrode is at least partly reflective to visible light, preferably more than 95% reflective, such as when forming a "bottom" electrode, such as in a lowest pixel in a stack. Also combination of the above is envisaged.

In an example the present pixel comprises one or more vortices in a plane of the pixel, wherein the one or more vortices have a dimension in the order of 0.8-1.2 times a pixel diameter, preferably 0.9-1.1 times a diameter. Such allows an improved liquid flow onto and from a pixel electrode.

In an example the present pixel comprises a pumping area, the pumping area preferably having a width of 0.1-0.3 a width of a pixel, and a length of 0.1-0.4 times a width of a storage area. Such provides both a small electrode distance with a high field, and exerts a high force upon the particles and fluid, and therefore induces a strong electro-osmotic flow onto the pixel electrode, and into a wider escape area next to it, which allows the liquid to leave the pixel again in a different direction.

In an example a stack of present pixels is envisaged comprising at least two pixels according to the invention. In an example three pixels may be stacked, such as a red pigment comprising pixel, a green pigment comprising pixel, and a blue pigment comprising pixel.

In an example the present electrophoretic display device further comprises a driver circuit for driving the one or more pixels by providing an electro-magnetic field, typically an electrical field. The applied voltage is in an example 15-30 V, preferably being large enough to move particles. Preferably counter ions are present.

In an example the electrophoretic display device comprises at least one shared field electrode. The shared field electrode may be shared by at least two pixels, typically by a row or column of pixels.

The present driver circuit for use in an electrophoretic display device according to the invention or in a pixel according to the invention, may comprise a means for providing a time varying electro-magnetic field between the at least one field electrode and the at least one accumulation electrode. Therewith movement from charged pigment particles to and from an accumulation electrode and from and to a field electrode is effected. The driver circuit may further provide an electro-magnetic field for clearing pixels (removing charged particles), for driving pixels (introducing charged particles), for resetting pixels (moving charged particles to an initial position). And for applying a static charge, for remaining charged pixels in position occupied at a point in time. Also a field for refreshing may be provided, e.g. for having a similar or same amount of pixels in an earlier position.

In an example the driver circuit comprises a switch for providing a static electro-magnetic field or charge to one or more of the electrodes. In an example only very scarcely a static pulse, or likewise a refresh pulse is provided, such as once every two hours. The pulse may be short and at a low intensity.

In an example the electronic display comprising pixels is provided in a flexible polymer, and the remainder of the display device is provided in glass. The glass may be rigid glass or flexible glass. If required a protection layer is provided. If more than one colour is provided, more than one layer of flexible polymer may be provided. The polymer may be poly ethylene naphthalate (PEN), poly ethylene terephthalate (PET) (optionally having a SiN layer), poly ethylene (PE), etc.

In a second aspect the present invention relates to a use of a display device according to the invention, preferably an electrophoretic display device, for providing a long term stable image. With the present device a stability of at least 24 hours is easily achievable. So for instance in a store a refresh of information once every day is sufficient.

As a result of very low energy consumption relatively large displays now can be made in an economic fashion. Also very high resolution devices become available, especially relevant if a device by nature can not be too large, such as for a mobile or smart phone. The present resolution may be in the order of 300 DPI, or better. A size of the device may be relatively small such as from 10 cm² (or smaller), up to very large scale, e.g. 1000 m².

It is noted that the present invention can be combined with e.g. a LCD-screen, keeping information much longer available for a reader and at a much lower energy consumption.

In a third aspect the present invention relates to a method of changing information according to claim 17. Therein a display device according to the invention is provided. In order to verify if information presented in the display is still valid, especially price information, the validity of information is checked. If the validity is lacking, the information is updated, preferably wireless updated. It is preferred to update the information in all displays being present (in e.g. a store) preferably at least once a day, more preferably at least every hour, more or less at the same time, that is real time. So in one go all the displays may be updated.

In a fourth aspect the present invention relates to an information system comprising the present display, a computer, the computer comprising a database, the database comprising up-to-date product information, at least one means for receiving data, at least one means for sending data, wherein the means preferably are wireless. As such a computer, or likewise a server, or a cloud, may provide information, e.g. entered into a database thereof, to one or more displays. In fact such may be done instantly when e.g. new information becomes available. Also information may be retrieved from the present displays. Preferably information or data is communicated wireless from computer to display and vice versa. Thereto means for transmitting (sending) and receiving are provided as both sides, in an example.

In a fifth aspect the present invention relates to a store information system comprising an information system according to the invention, one display per individual article, wherein the store in an example comprises at least 1000 different articles. It is noted that large stores may comprise 10.000-100.000 different articles or more. Of each article more than one unit may be present in the store. As such every article may have one display providing relevant information, such as price, code, etc.

In an example of the store information system it further comprises a virtual map of the store, wherein each display of an individual article comprises a unique tag, preferably one of an RFID tag, an IR-tag, wherein the virtual map of the store and an actual position of a tag in the store substantially overlap. As such communication between e.g. a computer and a specific display, intended to e.g. receive updated information, can be directed towards a specific location where the display resides. In order to make sure a correct display is addressed each display may comprise a unique tag, having a unique ID, such as an RFID-tag and IR-tag. As such a computer may also check if a display is in a correct location, that is a location where also an associated product resides. Thus an actual position of a display and virtual map of positions preferably overlap. If deviations from overlap are identified one may check if a display is e.g. defective, in another location, etc. therewith chances of mistakes are minimized.

The invention is further detailed by the accompanying figures and examples, which are exemplary and explanatory of nature and are not limiting the scope of the invention. To the person skilled in the art it may be clear that many variants, being obvious or not, may be conceivable falling within the scope of protection, defined by the present claims.

The invention although described in detailed explanatory context may be best understood in conjunction with the accompanying examples and figures.

### SUMMARY OF FIGURES

Fig. 1 shows a top view of a hexagonal layout of a display.
Figs. 2a,b show a side view of an embodiment of the present pixel.
Fig. 3 shows a top view of an example of the present display.
Fig. 4 shows a schematic layout of a present display.

### DETAILED DESCRIPTION OF FIGURES

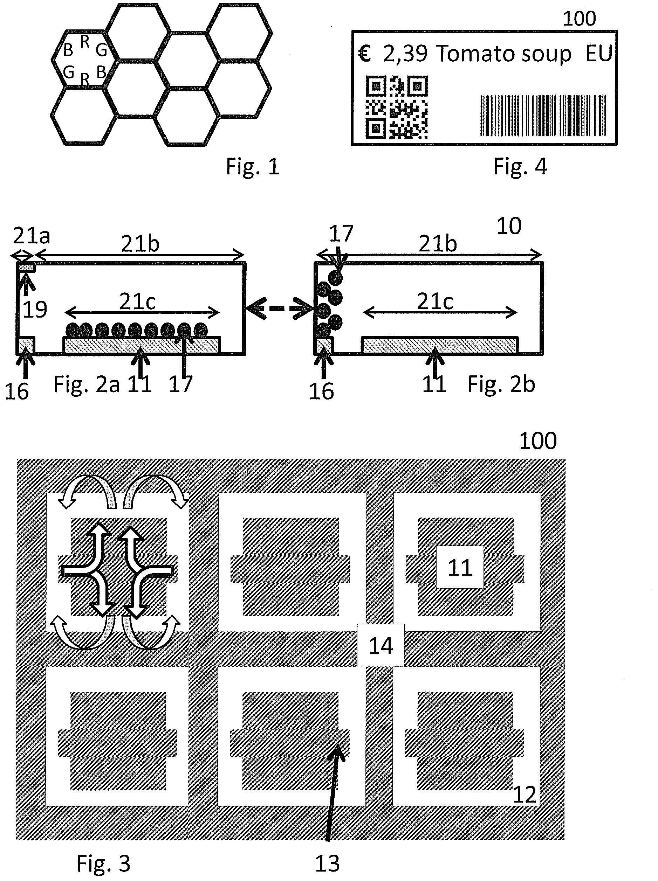

Fig. 1 shows a top view of a hexagonal layout of a display. Therein a first side may comprise red (R) pigmented particles, a second side blue (B) pigmented particles, and a third side green (G) pigmented particles, and so on. Such provides for a reliable and precise control of various types of pigmented particles.

Figs. 2A and 2 B show a schematic cross-sectional view of an embodiment of a pixel 10 of an electrophoretic display device 100 (see Fig. 3) according to the invention. The pixel 10 comprises charged pigment particles 17 which may move under control of an electro-magnetic field, typically an electric field. The pixel 10 comprises an aperture area 21b which is an area of the pixel 10 which is a visible part of the pixel 10. The aperture area may be substantially as large as the pixel area (fig. 2b), or somewhat smaller (fig. 2a). A pigmentation of this aperture area 21b determines the pigmentation as perceived by a viewer watching the electrophoretic display device 100 comprising the pixel 10. The pixel 10 further comprises a storage area 21a which is configured for storing charged pigment particles 17 away from the aperture area 21b. In the embodiment shown in Figs. 2a and 2b the storage area 21a comprises a shield 21a for shielding stored charged pigment particles 17 hidden from view. Such a shield 21a is fully optional. Alternative ways to generate a shielding of the charged pigment particles 17 from view is by using an opaque and substantially non-reflective accumulation electrode 16. However, the shielding 21a from view is not essential to the invention and even without the active shielding of the charged pigment particles 17 from view, the charge pigment particles 17 at the accumulation electrode 16 merely represent a dark rim or edge of the pixel 10. A part of the aperture area 21b comprises a field electrode 11. The field-electrode area 21c of the field electrode 11 is smaller compared to the dimension of the aperture 21b. Still the field-electrode area 21c of the field electrode 11 should preferably cover at least half of the aperture 21b to be able to change the pigmentation of the aperture 21b significantly using the charged pigment particles 17. A part of the storage area 21a comprises an accumulation electrode 16. The pixel 10 is configured for generating an electro-magnetic field between the accumulation electrode 16 and the field electrode 11 to move charged pigment particles 17 from the accumulation electrode 16 to the field electrode 11, or vice versa. If sufficient charged pigment particles 17 have migrated from the accumulation electrode 16 to the field electrode 11, or vice versa, the generated electrical field is switched off to stop the migration of particles and to create a static situation in which the pigmentation of the pixel 10 is determined via the charged pigment particles which have migrated.

The charged pigment particles 17 as used in the current pixel 10 have been selected sufficiently small to obtain a uniform distribution of charged pigment particles 17 across the field-electrode area 21c. The inventors have found that the charged pigment particles 17 behave in a different manner than known from the prior art when the dimension of the charged pigment particles 17 is reduced. Typically, when charged particles are collected on a charged electrode, the repellent force between the charged particles cause the charged particles to each find a position on the charged electrode in which the distance between individual particles is as large as possible. In practice, this means that normally (as in prior art) the charged particles all are arranged at an edge of the electrode, typically forming a rim at or around the electrode edges. The inventors have found that by reducing the dimensions of the charged pigment particles70 according to the invention, the distribution of the charged pigment particles 17 on a charged electrode is different. When the dimensions of the charged pigment particles 17 are below a certain threshold, the charged pigment particles 17 distribute substantially homogeneously across the whole surface of the charged electrode. This effect is beneficially used by the inventors to generate a pixel 10 for an electrophoretic display device 100 in which the pigmentation may be adapted by determining the amount of charged pigment particles 17 which are transferred from the accumulation electrode 16 to the field electrode 11. As soon as the charged pigment particles 17 arrive at the field electrode 11, the dimension of the charged pigment particles 17 allow them to behave differently than expected such that they start to cover the whole field-electrode area 21c homogeneously with charged pigment particles 17, rather than to only cover the field-electrode edges. Due to this homogeneous distribution of the charged pigment particles 17, the field-electrode area 21c always comprises a homogeneous pigmentation in which the intensity of the pigmentation is depending on the amount of charged pigment particles 17 which are collected at the field electrode 11.

A further benefit of the current invention is that the pigmentation generated may be maintained by maintaining a static charge on the field-electrode 11. Known in-plane electrophoretic display devices have a pair of electrodes arranged on either side of an aperture area. The pigmentation of such a known in- plane electrophoretic display device is generated by generating an electrical field between the pair of electrodes which determines the distribution of charged pigment particles between the pair of electrodes to determine a level of opaqueness determining the pigmentation of the pixel. However, due to the non-uniform electric field between the two electrodes in the known in-plane electrophoretic display device, a good uniformity of the pigmentation is difficult to obtain. In the pixel 10 according to the invention, the dimension of the charged pigment particles 17 is selected sufficiently small to obtain a uniform distribution on a charged electrode. As such, the distribution of the charged pigment particles 17 according to the invention always has a homogeneous distribution due to the nature of the charged pigment particles 17. This causes the electrophoretic display device 100 according to the invention to be easily addressable compared to known in-plane electrophoretic display devices.

Fig. 2B shows a first situation in which the charged pigment particles 17 all are accumulated at the accumulation electrode 16. Fig. 2A shows a second situation in which the charged pigment particles 17 all are homogeneously distributed across the field electrode 11. It will be clear to the person skilled in the art that any intermediate state may be possible and that a time-varying electric field between the accumulation electrode 16 and the field electrode 11 may be applied for determining the amount of charged pigment particles 17 which move between the accumulation electrode 16 and the field electrode 11.

In a preferred embodiment a major part of the charged pigment particles 17 of a pixel have a dimension smaller than 500 nanometers. The major part may, for example, relate to at least half of the charged pigment particles 17 present in the pixel 10. Still, over time, charged pigment particles 17 may, for example, clot to form some larger charged pigment particles. The charged pigment particles 17 do not necessarily have to have a symmetrical shape or a smooth shape. In a preferred embodiment the particle size of the major part of the charged pigment particles 17 is below 400 nanometers which is below the wavelength of the visible light. A benefit of having charged pigment particles 17 having a particle size below 400 nanometers is that possible scattering of visible light by the charged pigment particles 17 is reduced. As human visibility stops at 380 nanometers, using charged pigment particles 17 having a dimension less than 400 nanometers prevent possible scattering of substantially all of the light in the range visible to the human eye.

In the pixel 10 shown in Figs. 2A and 2B the field electrode 11 may be at least partially reflective to visible light. A benefit of this embodiment is that the electrophoretic display device 100 may use ambient light (not indicated) entered via the aperture area 21b and re-emitted via the aperture area 21b after reflection from the field electrode 11. As such, the electrophoretic display device 100 may be constituted of fewer components as no additional light-reflection layer may be required.

In an example of the pixel of figs. 2a,b an accumulation area is present at each side of the pixel (e.g. left and right in a rectangular pixel). In a further example thereof, or as an example, a first accumulation area comprises a first type of pigmented particle, such as black, green, red, or blue, and a second accumulation area comprises a second type of pigmented particles, e.g. blue. The different types of pigmented particles may carry a different charge.

In a further example of figs. 2a,b two or more pixels may be stacked.

In a further example of figs, 2a,b a field electrode, or likewise a bottom field electrode, may be reflective, e.g. mirror like.

In an example the pixel may further be provided with backlight, such as by LCD. In such a case the field electrode(s) are preferably largely transparent.

In a further example the field electrode may comprise two or more sub-field electrodes. A first sub-field electrode for a first pigmented particle, etc.

Fig. 3 shows a top view of a display 100 of pixels in which a fast liquid flow can be induced. The electrode pattern may be formed by applying a "common grid" or "common lines" (14) (often referred to as "storage electrode"), with pixel electrodes (also called "field electrodes") (11) placed in the "common grid" apertures or between the lines 14. Each pixel consists of an area that constitutes the "pump area" 13, which may be an area where a small gap between the "common grid" 14 that creates a high electric field. This field exerts a force on the electro-osmotic fluid, inducing fast liquid flow.
The liquid is then allowed to leave the pixel electrode again along the other edges of the display, where the pumping force is significantly smaller. A flow of liquid in the top left pixel is indicated by arrows. A similar flow may be present in other pixels as well, depending on presence of an electro-magnetic field applied. Further a release area 12 is indicated.

Fig. 4 shows a schematic layout of a present display 100. Therein price information, a barcode and a data matrix, indication of the product and country of origin are shown.

## Claims

1. Electrophoretic display device : (100) for use in a store, said electrophoretic display device (100) comprising
an electronic display comprising pixels,
a means for providing power,
a controller,
a driver circuit for applying an electro-magnetic field to the pixels,
a means for receiving data,
wherein the electronic display is an electrophoretic display comprising pixels, the pixel comprising
at least one aperture area (21b) being visible,
a fluid comprising at least one type of pigment particles (17) having a diameter smaller than 500 nm, the particles (17) being charged,
at least two electrodes (11,16) spaced apart for providing an electric-magnetic field, of which at least one electrode is an accumulation electrode (16) and at least one electrode is a field electrode (11),
wherein the at least one field electrode (11) occupies a field electrode area (21c), the field electrode area (21c) and aperture area (21b) largely coinciding,
at least one storage area (21a) for storing the at least one type of pigment particles (7) out of sight, wherein the at least one storage area (21a) comprises the accumulation electrode (16) and is adjacent to the at least one aperture area (21b) and
a restrictor for maintaining pigment particles (7) in the storage area (21a),
**characterized in that** the display device comprises a unique code for identification, such as an RFID, **in that** the electronic display has a width < 50 cm, a height < 10 cm, and a thickness < 1 cm, and **in that**
the restrictor is a temperature sensitive gel in the fluid, the gel having an increasing viscosity with increasing temperature.

2. Electrophoretic display device (100) according to claim 1, further comprising a means for attaching the electrophoretic display device (100), such as a clamp, an adhesive, and a permanent magnet.

3. Electrophoretic display device (100) according to claim 1 or 2, wherein a length of the pixel is smaller than 250 µm, preferably smaller than 150 µm, more preferably smaller than 100 µm, such as smaller than 90 µm.

4. Electrophoretic display device (100) according to any one of the preceding claims,
wherein the fluid carries a charge,
wherein the fluid comprises one or more of a surfactant, an emulsifier, a polar compound, and a compound capable of forming a hydrogen bond,
wherein the fluid has a relative permittivity εᵣ of less than 10,
wherein the pixel has a rectangular shape, such as a square shape, or a hexagonal shape,
wherein the at least one type of pigment particles (7) comprise one or more of white particles, red particles, green particles, blue particles, black particles,
wherein each type of pigment particle (7) carries a significantly different charge, the charge being from 5*10⁻⁷-0.1 C/m², and
wherein the pigment particles (7) are smaller than 400 nm,
preferably smaller than 100 nm, typically larger than 10 nm.

5. Electrophoretic display device (100) according to any of the preceding claims,
wherein the pixel further comprises a UV-filter, wherein the aperture area (21b) is more than 90% transparent, preferably more than 95%, and
wherein the at least one field electrode (11) is at least partly transparent to visible light, preferably more than 95% transparent, or wherein the at least one field electrode (11) is at least partly reflective to visible light, preferably more than 95% reflective
wherein a length of the pixel is smaller than 90 µm, wherein the fluid is provided in an amount of 1-100 gr/m², and
wherein the pigments (7) are provided in an amount of 0.02-30 gr/m².

6. Electrophoretic display device (100) according to any of the preceding claims, wherein the pixel comprises one or more vortices in the fluid in a plane of the pixel when a respective electromagnetic field is applied to the pixel,
wherein the one or more vortices have a dimension in the order of 0.8-1.2 times a pixel diameter, preferably 0.9-1.1 times a pixel diameter, and wherein the pixel comprises an electro-osmotic pumping area (13), the electro-osmotic pumping area (13) preferably having a width of 0.1-0.3 a width of a pixel, and a length of 0.1-0.4 times a width of a storage area.

7. Electrophoretic display device (100) according to any of the preceding claims, comprising a stack of pixels.

8. Electrophoretic display device (100) according to any of the preceding claims, wherein the electronic display comprising pixels is provided in at least one flexible polymer, and the remainder of the display device is provided in glass.

9. Electrophoretic display device (100) as in any one of the preceding claims, wherein the temperature sensitive gel comprises polyisocyanopeptides, grafted with oligo(ethylene glycol) side chains.

10. Electrophoretic display device (100) as in any one of the preceding claims, the electrophoretic display device (100) further comprising another restrictor for maintaining pigment particles (7) in the storage area (21a) that is configured as a magnetic changer of the pigment particles (7), changing the magnetic properties being caused by hysteresis.

11. Use of an electrophoretic display device (100) according to any of the preceding claims for providing a long term stable image, and for regular updating information.

12. Method of changing information on an electrophoretic display device comprising the steps of
providing an electrophoretic display device (100) according to any of claims 1-10,
checking validity of information presented in the electrophoretic display device (100),
if the validity is lacking, updating the information on the electrophoretic display device (100), preferably wireless updating,
wherein the information is updated preferably at least once a day, more preferably at least every hour, even more preferably real-time.

13. Store information system comprising at least one electrophoretic display device (100) according to any of claims 1-10, a computer, the computer comprising a database, the database comprising up-to-date product information, at least one means for receiving data, at least one means for sending data, wherein the means preferably are wireless, one electrophoretic display device (100) per individual article, wherein the store comprises at least 1000 articles.

## Patentansprüche

1. Elektrophoretische Anzeigevorrichtung (100) zur Verwendung in einem Geschäft, wobei die elektrophoretische Anzeigevorrichtung (100) umfasst
eine elektronische Anzeige, die Pixel umfasst,
ein Mittel zum Bereitstellen von Strom,
eine Steuereinheit,
eine Treiberschaltung zum Anlegen eines elektromagnetischen Feldes an die Pixel,
ein Mittel zum Empfangen von Daten,
wobei es sich bei der elektronischen Anzeige um eine elektrophoretische Anzeige handelt, die Pixel umfasst, wobei die Pixel umfassen
mindestens eine Öffnungsfläche (21b), die sichtbar ist,
ein Fluid, das mindestens einen Typ von Pigmentteilchen (17) mit einem Durchmesser von kleiner als 500 nm umfasst, wobei die Teilchen (17) geladen sind,
mindestens zwei beabstandete Elektroden (11, 16) zum Bereitstellen eines elektromagnetischen Feldes, von denen mindestens eine Elektrode eine Akkumulationselektrode (16) ist, und mindestens eine Elektrode eine Feldelektrode (11) ist,
wobei die mindestens eine Feldelektrode (11) eine Feldelektrodenfläche (21c) belegt, wobei sich die Feldelektrodenfläche (21c) und Öffnungsfläche (21b) weitgehend decken,
mindestens eine Speicherfläche (21a) zum Speichern des mindestens einen Typs von Pigmentteilchen (7) außer Sicht, wobei die mindestens eine Speicherfläche (21a) die Akkumulationselektrode (16) umfasst und an die mindestens eine Öffnungsfläche (21b) angrenzt, und einen Begrenzer zum Halten von Pigmentteilchen (7) in der Speicherfläche (21a),
**dadurch gekennzeichnet, dass** die Anzeigevorrichtung einen einzigartigen Code zur Identifizierung, wie etwa eine RFID, umfasst, dadurch, dass die elektronische Anzeige eine Breite < 50 cm, eine Höhe < 10 cm, und eine Dicke < 1 cm aufweist, und dadurch, dass
es sich bei dem Begrenzer um ein temperaturempfindliches Gel in dem Fluid handelt, wobei das Gel eine mit zunehmender Temperatur zunehmende Viskosität aufweist.

2. Elektrophoretische Anzeigevorrichtung (100) nach Anspruch 1, weiter ein Mittel zum Befestigen der elektrophoretischen Anzeigevorrichtung (100), wie etwa eine Klammer, einen Klebstoff, und einen Permanentmagneten, umfassend.

3. Elektrophoretische Anzeigevorrichtung (100) nach Anspruch 1 oder 2, wobei eine Länge des Pixels kleiner ist als 250 µm, vorzugsweise kleiner als 150 µm, bevorzugter kleiner als 100 µm, wie etwa kleiner als 90 µm.

4. Elektrophoretische Anzeigevorrichtung (100) nach einem der vorstehenden Ansprüche,
wobei das Fluid eine Ladung trägt,
wobei das Fluid eines oder mehrere umfasst aus einem Tensid, einem Emulgator, einer polaren Verbindung, und einer Verbindung, die in der Lage ist, eine Wasserstoffbindung zu bilden,
wobei das Fluid eine relative Permittivität εᵣ von weniger als 10 aufweist,
wobei das Pixel eine rechteckige Form, wie etwa eine quadratische Form, oder eine sechseckige Form aufweist,
wobei der mindestens eine Typ von Pigmentteilchen (7) eines oder mehrere aus weißen Teilchen, roten Teilchen, grünen Teilchen, blauen Teilchen, schwarzen Teilchen umfassen,
wobei jeder Typ von Pigmentteilchen (7) eine signifikant unterschiedliche Ladung trägt, wobei die Ladung von 5^{∗}10⁻⁷ bis 0,1 C/m² beträgt, und
wobei die Pigmentteilchen (7) kleiner als 400 nm, vorzugsweise kleiner als 100 nm, typischerweise größer als 10 nm sind.

5. Elektrophoretische Anzeigevorrichtung (100) nach einem der vorstehenden Ansprüche,
wobei das Pixel weiter einen UV-Filter umfasst,
wobei die Öffnungsfläche (21b) mehr als 90 %, vorzugsweise mehr als 95 %, durchlässig ist, und
wobei die mindestens eine Feldelektrode (11) mindestens teilweise für sichtbares Licht durchlässig ist, vorzugsweise mehr als 95 % durchlässig, oder wobei die mindestens eine Feldelektrode (11) mindestens teilweise für sichtbares Licht reflektierend ist, vorzugsweise mehr als 95 % reflektierend,
wobei eine Länge des Pixels kleiner ist als 90 µm, wobei das Fluid in einer Menge von 1-100 g/m² bereitgestellt ist, und wobei die Pigmente (7) in einer Menge von 0,02-30 g/m² bereitgestellt sind.

6. Elektrophoretische Anzeigevorrichtung (100) nach einem der vorstehenden Ansprüche,
wobei das Pixel, wenn ein jeweiliges elektromagnetisches Feld an das Pixel angelegt wird, einen oder mehrere Wirbel im Fluid in einer Ebene des Pixels umfasst,
wobei der eine oder die mehreren Wirbel eine Abmessung in der Größenordnung vom 0,8-1,2-Fachen eines Pixeldurchmessers, vorzugsweise 0,9-1,1-Fachen eines Pixeldurchmessers aufweisen, und
wobei das Pixel eine elektroosmotische Pumpfläche (13) umfasst, wobei die elektroosmotische Pumpfläche (13) vorzugsweise eine Breite vom 0,1-0,3-Fachen einer Breite eines Pixels, und eine Länge vom 0,1-0,4-Fachen einer Breite einer Speicherfläche aufweist.

7. Elektrophoretische Anzeigevorrichtung (100) nach einem der vorstehenden Ansprüche, die einen Pixelstapel umfasst.

8. Elektrophoretische Anzeigevorrichtung (100) nach einem der vorstehenden Ansprüche, wobei die Pixel umfassende elektronische Anzeige aus mindestens einem flexiblen Polymer bereitgestellt ist, und der Rest der Anzeigevorrichtung aus Glas bereitgestellt ist.

9. Elektrophoretische Anzeigevorrichtung (100) nach einem der vorstehenden Ansprüche,
wobei das temperaturempfindliche Gel mit Oligo(ethylenglykol)-Seitenketten gepfropfte Polyisocyanopeptide umfasst.

10. Elektrophoretische Anzeigevorrichtung (100) nach einem der vorstehenden Ansprüche, wobei die elektrophoretische Anzeigevorrichtung (100) weiter einen weiteren Begrenzer zum Halten von Pigmentteilchen (7) in der Speicherfläche (21a) umfasst, welcher als magnetischer Änderer für die Pigmentteilchen (7) ausgelegt ist, der die durch Hysterese verursachten magnetischen Eigenschaften ändert.

11. Verwendung einer elektrophoretischen Anzeigevorrichtung (100) nach einem der vorstehenden Ansprüche zum Bereitstellen eines langfristig stabilen Bildes, und zum regelmäßigen Aktualisieren von Informationen.

12. Verfahren zum Ändern von Informationen auf einer elektrophoretischen Anzeigevorrichtung, das die folgenden Schritte umfasst:
Bereitstellen einer elektrophoretischen Anzeigevorrichtung (100) nach einem der Ansprüche 1-10,
Überprüfen der Gültigkeit von Informationen, die in der elektrophoretischen Anzeigevorrichtung (100) dargestellt werden,
Aktualisieren der Informationen auf der elektrophoretischen Anzeigevorrichtung (100), vorzugsweise drahtloses Aktualisieren, wenn die Gültigkeit fehlt,
wobei die Informationen vorzugsweise mindestens einmal am Tag, bevorzugter mindestens jede Stunde, noch bevorzugter in Echtzeit aktualisiert werden.

13. Geschäftsinformationssystem, das mindestens eine elektrophoretische Anzeigevorrichtung (100) nach einem der Ansprüche 1-10, einen Computer, wobei der Computer eine Datenbank umfasst, wobei die Datenbank aktuelle Produktinformationen umfasst, mindestens ein Mittel zum Empfangen von Daten, mindestens ein Mittel zum Senden von Daten, wobei die Mittel vorzugsweise drahtlos sind, eine elektrophoretische Anzeigevorrichtung (100) pro einzelnem Artikel umfasst, wobei das Geschäft mindestens 1.000 Artikel umfasst.

## Revendications

1. Dispositif d'affichage électrophorétique (100) destiné à être utilisé dans un magasin, ledit dispositif d'affichage électrophorétique (100) comprenant
un affichage électronique comprenant des pixels,
un moyen pour fournir de l'énergie,
un dispositif de commande,
un circuit pilote pour appliquer un champ électromagnétique aux pixels,
un moyen pour recevoir des données,
dans lequel l'affichage électronique est un affichage électrophorétique comprenant des pixels, le pixel comprenant
au moins une aire d'ouverture (21b) étant visible,
un fluide comprenant au moins un type de particules de pigment (17) présentant un diamètre inférieur à 500 nm, les particules (17) étant chargées,
au moins deux électrodes (11, 16) espacées pour fournir un champ électromagnétique, dont au moins une électrode est une électrode d'accumulation et au moins une électrode est une électrode de champ (11),
dans lequel la au moins une électrode de champ (11) occupe une aire d'électrode de champ (21c), l'aire d'électrode de champ (21c) et l'aire d'ouverture (21b) coïncidant largement,
au moins une aire de stockage (21a) pour stocker le au moins un type de particules de pigment (7) hors de vue, dans lequel la au moins une aire de stockage (21a) comprend l'électrode d'accumulation (16) et est adjacente à la au moins une aire d'ouverture (21b) et un restricteur pour maintenir des particules de pigment (7) dans l'aire de stockage (21a),
**caractérisé en ce que** le dispositif d'affichage comprend un code unique d'identification, comme une RFID, **en ce que** l'affichage électronique présente une largeur < 50 cm, une hauteur < 10 cm et une épaisseur < 1 cm, et **en ce que**
le restricteur est un gel sensible à la température dans le fluide, le gel présentant une viscosité croissante avec une température croissante.

2. Dispositif d'affichage électrophorétique (100) selon la revendication 1, comprenant en outre un moyen pour fixer le dispositif d'affichage électrophorétique (100), tel qu'une pince, un adhésif et un aimant permanent.

3. Dispositif d'affichage électrophorétique (100) selon la revendication 1 ou 2, dans lequel une longueur du pixel est inférieure à 250 µm, de préférence inférieure à 150 µm, plus préférentiellement inférieure à 100 µm, comme inférieure à 90 µm.

4. Dispositif d'affichage électrophorétique (100) selon l'une quelconque des revendications précédentes,
dans lequel le fluide porte une charge,
dans lequel le fluide comprend un ou plusieurs parmi un tensioactif, un émulsifiant, un composé polaire et un composé capable de former une liaison hydrogène,
dans lequel le fluide présente une permittivité relative εᵣ inférieure à 10,
dans lequel le pixel présente une forme rectangulaire, telle qu'une forme carrée, ou une forme hexagonale,
dans lequel le au moins un type de particules de pigment (7) comprend une ou plusieurs parmi des particules blanches, des particules rouges, des particules vertes, des particules bleues, des particules noires,
dans lequel chaque type de particule de pigment porte une charge significativement différente, la charge étant de 5^{∗}10⁻⁷ à 0,1 C/m², et
dans lequel les particules de pigment sont inférieures à 400 nm, de préférence inférieures à 100 nm, typiquement supérieures à 10 nm.

5. Dispositif d'affichage électrophorétique (100) selon l'une quelconque des revendications précédentes,
dans lequel le pixel comprend en outre un filtre UV,
dans lequel l'aire d'ouverture (21b) est transparente à plus de 90 %, de préférence à plus de 95 %, et
dans lequel la au moins une électrode de champ (11) est au moins partiellement transparente à la lumière visible, de préférence transparente à plus de 95 %, ou dans lequel la au moins une électrode de champ (11) est au moins partiellement réfléchissante à la lumière visible, de préférence réfléchissante à plus de 95 %
dans lequel une longueur du pixel est inférieure à 90 µm, dans lequel le fluide est fourni en une quantité de 1 à 100 gr/m², et dans lequel les pigments (7) sont fournis en une quantité de 0,02 à 30 gr/m².

6. Dispositif d'affichage électrophorétique (100) selon l'une quelconque des revendications précédentes,
dans lequel le pixel comprend un ou plusieurs tourbillons dans le fluide dans un plan du pixel lorsqu'un champ électromagnétique respectif est appliqué au pixel,
dans lequel les un ou plusieurs tourbillons présentent une dimension de l'ordre de 0,8 à 1,2 fois un diamètre de pixel, de préférence de 0,9 à 1,1 fois un diamètre de pixel, et
dans lequel le pixel comprend une aire de pompage électro-osmotique (13), l'aire de pompage électro-osmotique (13) présentant de préférence une largeur de 0,1 à 0,3 fois une largeur d'un pixel, et une longueur de 0,1 à 0,4 fois une largeur d'une aire de stockage.

7. Dispositif d'affichage électrophorétique (100) selon l'une quelconque des revendications précédentes, comprenant un empilement de pixels.

8. Dispositif d'affichage électrophorétique (100) selon l'une quelconque des revendications précédentes, dans lequel l'affichage électronique comprenant des pixels est prévu dans au moins un polymère flexible, et le reste du dispositif d'affichage est prévu dans du verre.

9. Dispositif d'affichage électrophorétique (100) selon l'une quelconque des revendications précédentes,
dans lequel le gel sensible à la température comprend des polyisocyanopeptides, greffés avec des chaînes latérales d'oligo(éthylène glycol).

10. Dispositif d'affichage électrophorétique (100) selon l'une quelconque des revendications précédentes, le dispositif d'affichage électrophorétique (100) comprenant en outre un autre restricteur pour maintenir des particules de pigment (7) dans l'aire de stockage (21a) qui est configuré comme un modificateur magnétique des particules de pigment (7), modifiant les propriétés magnétiques provoquées par hystérésis.

11. Utilisation d'un dispositif d'affichage électrophorétique (100) selon l'une quelconque des revendications précédentes pour fournir une image stable à long terme, et pour une mise à jour régulière d'informations.

12. Procédé de modification d'informations sur un dispositif d'affichage électrophorétique comprenant les étapes consistant à :
fournir un dispositif d'affichage électrophorétique (100) selon l'une quelconque des revendications 1 à 10,
vérifier une validité des informations présentées dans le dispositif d'affichage électrophorétique (100),
si la validité fait défaut, mettre à jour les informations sur le dispositif d'affichage électrophorétique (100), de préférence mettre à jour sans fil,
dans lequel les informations sont mises à jour de préférence au moins une fois par jour, plus préférentiellement au moins toutes les heures, encore plus préférentiellement en temps réel.

13. Système d'informations de magasin comprenant au moins un dispositif d'affichage électrophorétique (100) selon l'une quelconque des revendications 1-10, un ordinateur, l'ordinateur comprenant une base de données, la base de données comprenant des informations à jour sur les produits, au moins un moyen pour recevoir des données, au moins un moyen pour envoyer des données, dans lequel les moyens sont de préférence sans fil, un dispositif d'affichage électrophorétique (100) par article individuel, dans lequel le magasin comprend au moins 1000 articles.
